# EUROPÄISCHE PATENTSCHRIFT

(11) **EP 1 694 984 B1**
(45) Veröffentlichungstag und Bekanntmachung des Hinweises auf die Patenterteilung: **29.10.2008**
(21) Anmeldenummer: 03789374.0
(22) Anmeldetag: 20.12.2003
(51) Int. Cl.: F16H 48/06, F16H 48/08, F16H 48/10, B60K 17/16

(54) **DIFFERENTIALKORB MIT INNENLIEGENDEM LAMELLENPAKET**
DIFFERENTIAL CASE COMPRISING AN INTERIOR DISC PACK
BOITIER DIFFERENTIEL COMPRENANT UN PAQUET DE DISQUES INTEGRE

(43) Veröffentlichungstag der Anmeldung: 30.08.2006
(73) Patentinhaber: GKN Driveline International GmbH, 53797 Lohmar (DE)
(72) Erfinder: KRAMER, Fred, 53343 Wachtberg (DE); CHLUDEK, Adrian, 53757 St. Augustin (DE)
(74) Vertreter: Oberwalleney, Stephan
(86) Internationale Anmeldenummer: PCT/EP2003/014687
(87) Internationale Veröffentlichungsnummer: WO 2005/064206

(56) Entgegenhaltungen:
- DE-A- 4 135 739
- DE-A- 4 135 755
- DE-A- 4 330 581
- DE-C- 3 402 917
- DE-C- 3 402 918
- US-A- 3 523 467
- US-A- 3 741 343
- US-A- 4 625 585
- US-A- 5 279 401

## Beschreibung

Die Erfindung betrifft ein Differentialgetriebe mit einem drehbar angeordneten Differentialkorb, in dem eine Lamellenkupplung zwischen dem Differentialkorb und einem Seitenwellenrad wirksam eingesetzt ist, und mit einem Aktuator für die Lamellenkupplung. Solche Lamellenkupplungen werden in sperrbaren Differentialgetrieben eingesetzt, bei denen durch Betätigung der Lamellenkupplung ein Sperrmoment zwischen dem Differentialkorb und einem der Seitenwellenräder und damit mittelbar auch zwischen den Seitenwellenrädern aufgebaut wird, so daß in den Differentialkorb eingeleitetes Drehmoment auch dann an beiden Seitenwellenrädern wirksam aufgebaut werden kann, wenn an einem der Seitenwellenräder kein Gegenmoment anliegt. Differentialgetriebe der genannten Art werden in Kraftfahrzeugen als Achsdifferentiale zwischen den Antriebsrädern einer Antriebsachse oder als Mittendifferentiale zwischen zwei Antriebsachsen eingesetzt. Bei bekannten Differentialkörben erfordert der für die Lamellenkupplung erforderliche Bauraum ein sehr tiefes Korbbauteil, dessen Bearbeitung schwierig ist.

Aus der US 5 279 401 A ist ein extern steuerbares Differentialgetriebe mit einem Differentialgehäuse bekannt, in dem ein zweiteiliger Differentialkorb drehbar gelagert ist. Der Differentialkorb umfaßt zwei napfförmige Korbteile, in dem die Differentialräder und die Lamellenkupplung aufgenommen sind, sowie einen Aktuator für die Lamellenkupplung. Der Aktuator umfaßt einen Betätigungsring und einen Stützring, der gegenüber dem Gehäuse, in dem der Differentialkorb drehbar gelagert ist, axial abgestützt ist. Durch Drehen des Stützrings wird der Betätigungsring in Richtung Lamellenkupplung beaufschlagt, so daß die Lamellenkupplung geschlossen wird. Dabei werden die auf die Lamellenkupplung bzw. den Differentialkorb einwirkenden Axialkräfte über das Getriebegehäuse abgestützt.

Hiervon ausgehend liegt der vorliegenden Erfindung die Aufgabe zugrunde, ein verbessertes Differentialgetriebe vorzuschlagen, dessen Differentialkorb bestehende Nachteile nicht aufweist und vorteilhafte Wirkungen zeigt.

Die Lösung hierfür besteht in einem Differentialgetriebe, bei dem der Differentialkorb ein napfförmiges Korbteil aufweist, in welchem die Seitenwellenräder und Ausgleichsräder aufgenommen sind, und einen daran angesetzten napfförmigen Deckel umfaßt, in dem die Lamellen der Lamellenkupplung aufgenommen sind, wobei am Deckel außen eine Hülse angeordnet ist, an der sich der Aktuator für die Sperrkupplung axial abstützen kann. Nach dieser Lösung wird die für das Lamellenpaket der Lamellenkupplung erforderliche axiale Tiefe im Deckel des Differentialkorbs vorgehalten, so daß das Korbteil entsprechend axial kürzer und damit steifer werden kann, während zugleich der Deckel durch eine napfartige Ausführung zusätzliche Funktionen übernehmen kann. Die Napfform von Korbteil und Deckel bedeutet jeweils, daß ein Boden und ein Mantel ausgebildet sind, wobei zur gegenseitigen Verbindung an der Öffnungsseite jeweils Flanschabschnitte vorgesehen sein können. Die für die Befestigung eines antreibenden Tellerrades dienenden Flanschabschnitte an beiden Korbbauteilen liegen bezogen auf die Längserstreckung nunmehr zentraler, so daß die Krafteinleitung in Bezug auf die Lagerung des Differentialkorbes günstiger ist.

In bevorzugter Ausführungsform ist vorgesehen, daß die Außenlamellen der Lamellenkupplung im Drehsinn formschlüssig im Deckel gehalten sind und die Innenlamellen der Lamellenkupplung im Drehsinn formschlüssig auf einer mit einem Seitenwellenrad verbundenen Nabe gehalten sind. Dies bedeutet, daß keine Zwischenträger oder dergleichen für die Lamellenkupplung erforderlich werden und daß eine Vormontage der Lamellenkupplung im Deckel mit darin eingesetzter Kupplungsnabe bzw. eingesetztem Seitenrad möglich ist, wobei auf diese vormontierte Einheit abschließend nur noch das Korbteil aufgesetzt werden muß, in dem das andere Seitenwellenrad und die Ausgleichsräder von Lagerzapfen für die Ausgleichsräder sicher gehalten werden. Die Montage des gesamten Differentialkorbes ist somit wesentlich vereinfacht.

Der Aktuator kann auf der Hülse des Deckels radial gelagert sein, sofern er nicht berührungslos gegenüber der Hülse im Differentialgehäuse gelagert ist.

Zur Verbesserung der Kühlung der Lamellenkupplung können im Deckel auf dem Umfang Durchbrüche vorgesehen sein, durch die im Differentialgehäuse stehendes Öl ständig zu den Kupplungslamellen zutreten kann. Weiterhin können den Durchbrüchen Schaufeln mit Zentripetalwirkung für das Öl im Differentialgehäuse zugeordnet sein, die bei umlaufendem Differentialkorb Öl von außen auf die Lamellenkupplung schöpfen. Die Schaufeln sind hierbei an die bevorzugte Drehrichtung des Differentialkorbes, die der Vorwärtsfahrt des mit dem Differentialgetriebe ausgerüsteten Kraftfahrzeuges entspricht, angepaßt.

Ein bevorzugtes Ausführungsbeispiel der Erfindung ist in den Zeichnungen dargestellt und wird nachstehend beschrieben.
- Figur 1: zeigt einen erfindungsgemäßen Differentialkorb in 3D-Ansicht;
- Figur 2: zeigt den Differentialkorb nach Figur 1 im Längsschnitt;
- Figur 3: zeigt den Deckel des Differentialkorbes nach Figur 2 im Längsschnitt;
- Figur 4: zeigt den Deckel im Querschnitt gemäß der Schnittlinie in Figur 3.

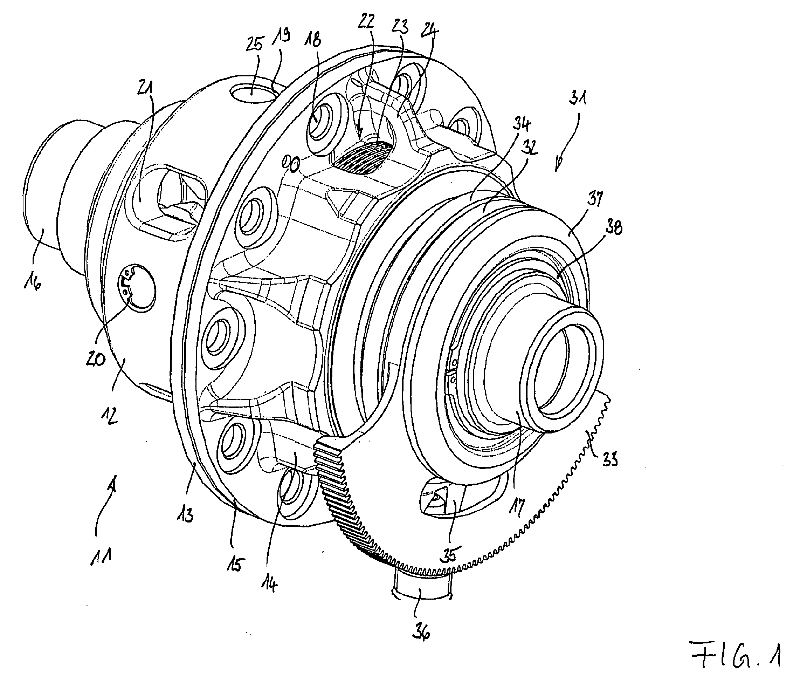

In Figur 1 ist ein Differentialkorb 11 gezeigt, der im wesentlichen aus einem Korbteil 12 mit angeformtem Flansch 13 sowie aus einem Deckelteil 14 mit angeformtem Flansch 15 besteht. Am Korbteil 12 ist eine erste Lagerhülse 16 angeformt, auf die ein Wälzlager aufgezogen werden kann. Am Deckel 14 ist eine zweite Lagerhülse 17 angeformt, auf die ein zweites Wälzlager aufgezogen werden kann. Mittels der Wälzlager ist der Differentialkorb in einem hier nicht dargestellten Getriebegehäuse drehbar zu lagern. In den Flanschen 13, 15 sind Durchgangsbohrungen 18 erkennbar, mittels derer die Teile 12, 14 des Differentialkorbs miteinander verschraubt werden können, wobei zugleich ein hier nicht dargestelltes Tellerrad zum drehenden Antrieb des Differentialkorbes mit den Flanschen verschraubt werden kann. Im Korbteil sind erste Bohrungen 19 erkennbar, in die Zapfen 25 für Ausgleichsräder eingesetzt sind, die mit Sicherungsringen 20 gesichert sind. Weiterhin sind zweite Durchbrüche 21 gezeigt, die dem Zutritt von Öl zum Inneren des Differentialkorbes dienen.

Im Deckelteil 14 sind Durchbrüche 22 vorgesehen, die erkennen lassen, daß ein Lamellenpaket 23 innerhalb des Deckels 14 sitzt. In Zuordnung zu den Durchbrüchen sind Schöpfflügel bzw. Schaufeln 24 vorgesehen, mit denen bei umlaufendendem Differentialkorb Öl auf die Außenseite des Lamellenpaketes 23 gefördert werden kann. Koaxial zum Deckel 14 ist ein Aktuator 31 angeordnet, der im wesentlichen eine drehend antreibbare Stellscheibe 32 mit einem Zahnsegment 33 sowie eine axial verschiebbare Druckscheibe 34, die mit einer Klaue 35 gegenüber einem im Gehäuse festgesetzten Zapfen 36 verdrehfest gehalten ist, umfaßt. Die Stellscheibe 32 stützt sich axial an einer Stützscheibe 37 ab, die mittels eines Sicherungsringes 38 auf einer weitgehend verdeckten Hülse innerhalb des Aktuators festgelegt ist. Der Aktuator 31 ist gegenüber dem nicht dargestellten Gehäuse im wesentlichen stehend angeordnet, während der Differentialkorb 11 üblicherweise dauernd drehend angetrieben wird.

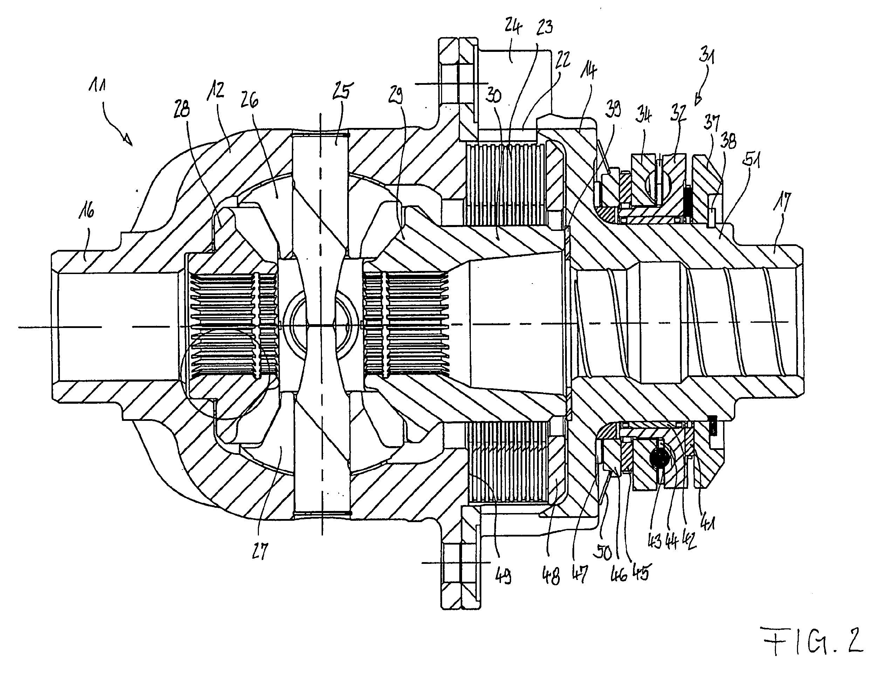

In Figur 2 sind gleiche Einzelheiten wie in Figur 1 mit gleichen Bezugsziffern belegt. Auf die vorangehende Beschreibung wird Bezug genommen. Im einzelnen ist hier erkennbar, daß im Korbteil 12 sich kreuzende Zapfen 25 eingesetzt sind, auf denen Ausgleichsräder 26, 27 gelagert sind. Die Ausgleichsräder 26, 27 kämmen mit Seitenwellenrädern 28, 29. Ein erstes Seitenwellenrad ist im Korbteil 12 gleitend gelagert, während ein zweites Seitenwellenrad 29 im wesentlichen selbstzentrierend zwischen den Ausgleichsrädern 26, 27 geführt ist. Das letztgenannte Seitenwellenrad 29 ist einstückig mit einer Kupplungsnabe 30 ausgebildet, das die Innenlamellen des Lamellenpakets 23 trägt. Die Außenlamellen des Lamellenpaketes 23 sind formschlüssig im Deckel 14 gehalten, der im Bereich der Schaufeln 24 und der Durchbrüche 23 geschnitten ist. Zwischen Deckel 14 und Nabe 30 ist eine Anlaufscheibe 39 erkennbar. Der Aktuator 31 läßt hier weitere Einzelheiten neben der drehend antreibbaren Verstellscheibe 32, der drehfest gehaltenen Druckscheibe 34 und der von dem Sicherungsring 38 axial gesicherten Stützscheibe 37 erkennen. Dies sind nämlich ein Axiallager 41 zwischen Verstellscheibe 32 und Stützscheibe 37, ein Radiallager 42, über das die Verstellscheibe 32 auf einer Hülse 51 gelagert ist, und in Paaren von Kugelrillen in den Scheiben 32, 34 laufende Kugeln 43. Die Kugeln 43 sind zu mehreren über dem Umfang verteilt in einem Käfig 44 abstandsgleich gehalten. Wie an sich bekannt haben die nicht im einzelnen bezeichneten Kugelrillen in den einander gegenüberliegenden Flächen der Scheiben über dem Umfang veränderliche Tiefe, so daß bei einem Verdrehen der Verstellscheibe 32 gegenüber der Druckscheibe 34 die Kugeln von tieferen Rillenbereichen in flachere Rillenbereich laufen. Hierbei drückt sich die unverdrehbar gehaltene Druckscheibe 34 von der Verstellscheibe 32 axial weg. Über ein weiteres Nadellager 45 und eine erste Druckplatte 46 wird über Zapfen 47, die den Deckel 14 axial durchsetzen, eine innere Druckscheibe 48 beaufschlagt und axial verschoben, die das Lamellenpaket 23 zusammendrückt, welches sich an einer Ringfläche 49 des Korbteils 12 abstützt. Bei einem Zurückdrehen der Verstellscheibe 32 wird über eine Tellerfeder 50 die Druckplatte 46 zurückgedrückt, so daß das Lamellenpaket 23 entlastet wird. Durch das Schließen des Lamellenpaketes wird ein Sperrmoment zwischen den Seitenwellenrädern 28, 29 aufgebaut.

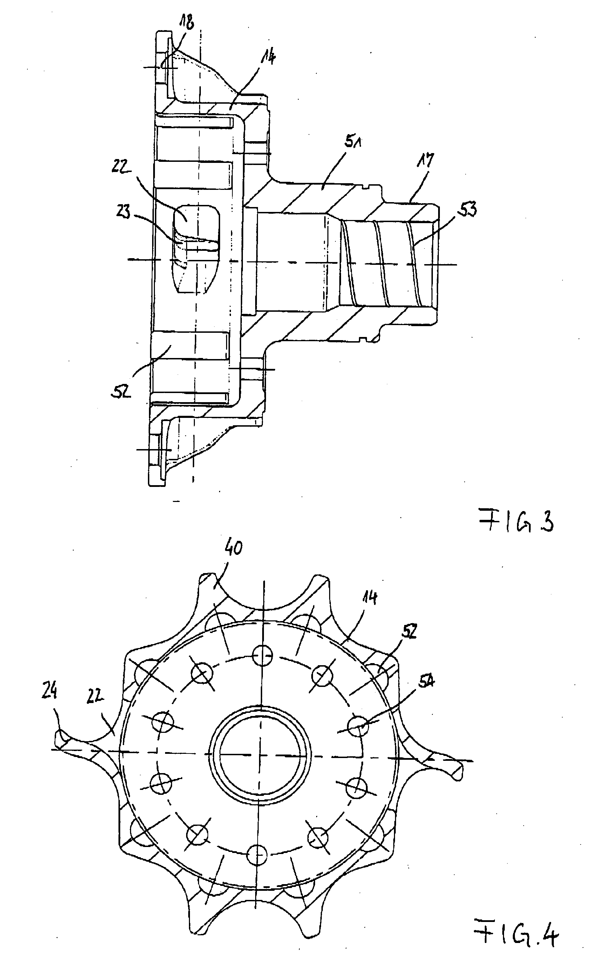

In Figur 3 ist der Deckel nach Figur 2 in leicht abgewandelter Form als Einzelheit dargestellt. Gleiche Einzelheiten sind mit gleichen Bezugsziffern wie in Figur 2 belegt. Im Inneren des Deckels 14 sind Längsnuten 52 umfangsverteilt angeordnet, in die an den Außenlamellen angebrachte Ansätze formschlüssig eingreifen können. Innerhalb der Hülse 17, 51 ist eine Schmierölnut 53 erkennbar. Die Zuordnung der Schaufeln 24 zu den Durchbrüchen 22 ist besser erkennbar.

In Figur 4 sind gleiche Einzelheiten wie in den Figuren 2 und 3 mit gleichen Bezugsziffern bezeichnet. Im Deckel 14 sind die Längsnuten 52 für den formschlüssigen Eingriff der Außenlamellen sowie axiale Durchgangslöcher 54, durch die die vorgenannten Zapfen gesteckt werden, erkennbar. Weiterhin ist hier die Form und die Funktion der Schaufeln 24 im Zusammenwirken mit den Durchbrüchen 22, die von einer rechtsdrehenden Bewegung des Deckels 14 ausgeht, im einzelnen erkennbar. Neben den Schaufeln 24 sind Kühlrippen 40 erkennbar, die zugleich der Aussteifung des Deckels 14 dienen.

Der in den Figuren 3 und 4 gezeigte Deckel 14 kann zusammen mit dem in Figur 2 gezeigten Lamellenpaket 23 und dem Seitenwellenrad 29 demontiert und durch ein zum Seitenwellenrad 28 symmetrisches zweites Seitenwellenrad und einen im wesentlichen flachen Deckel ersetzt werden, um ausgehend vom gleichen Napfteil 12 ein offenes nicht separates Differential darzustellen.

### Bezugszeichenliste

- 11: Lamellenkupplung
- 12: Napfteil
- 13: Flansch
- 14: Deckelteil
- 15: Flansch
- 16: Lagerhülse
- 17: Lagerhülse
- 18: Schraubenloch
- 19: Durchgangsloch
- 20: Sicherungsring
- 21: Durchbruch
- 22: Durchbruch
- 23: Lamellenpaket
- 24: Schaufel
- 25: Zapfen
- 26: Ausgleichsrad
- 27: Ausgleichsrad
- 28: Seitenwellenrad
- 29: Seitenwellenrad
- 30: Kupplungsnabe
- 31: Aktuator
- 32: Verstellscheibe
- 33: Zahnsegment
- 34: Druckscheibe
- 35: Klaue
- 36: Zapfen
- 37: Stützscheibe
- 38: Sicherungsring
- 39: Scheibe
- 40: Kühlrippe
- 41: Axiallager
- 42: Radiallager
- 43: Kugel
- 44: Kugelkäfig
- 45: Axiallager
- 46: Druckscheibe
- 47: Zapfen
- 48: Druckscheibe
- 49: Stützfläche
- 50: Tellerfeder
- 51: Hülse

## Patentansprüche

1. Differentialgetriebe mit einem drehbar angeordneten Differentialkorb (11), in dem eine Lamellenkupplung (23) zwischen dem Differentialkorb (11) und einem Seitenwellenrad (29) wirksam eingesetzt ist, und mit einem Aktuator (31) für die Lamellenkupplung (23), wobei der Differentialkorb (11) ein napfförmiges Korbteil (12) aufweist, in welchem Seitenwellenräder (28, 29) und Ausgleichsräder (26, 27) aufgenommen sind, und wobei der Differentialkorb einen napfförmigen Deckel (14) umfaßt, in dem die Lamellen der Lamellenkupplung (23) aufgenommen sind, wobei am Deckel (14) außen eine Hülse (51) angeordnet ist,
**dadurch gekennzeichnet,**
**daß** sich der Aktuator (31) für die Lamellenkupplung (23) an der Hülse (51) des Deckels (14) axial abstützt.

2. Differential nach Anspruch 1,
**dadurch gekennzeichnet,**
**daß** die Außenlamellen der Lamellenkupplung (23) im Drehsinn formschlüssig im Deckel (14) gehalten sind und die Innenlamellen der Lamellenkupplung (23) im Drehsinn formschlüssig auf einer mit einem Seitenwellenrad (29) verbundenen Nabe (30) gehalten sind.

3. Differential nach einem der Ansprüche 1 oder 2,
**dadurch gekennzeichnet,**
**daß** der Aktuator (31) radial auf der Hülse (51) gelagert ist.

4. Differential nach einem der Ansprüche 1 bis 3,
**dadurch gekennzeichnet,**
**daß** der Deckel auf dem Umfang Durchbrüche (22) aufweist.

5. Differential nach Anspruch 4,
**dadurch gekennzeichnet,**
**daß** der Deckel den Durchbrüchen (22) zugeordnete Schaufeln (24) mit Zentripetalwirkung für ein umgebendes Medium hat.

6. Differential nach einem der Ansprüche 1 bis 5,
**dadurch gekennzeichnet,**
**daß** der Deckel axiale Bohrungen (54) hat, in denen axial bewegliche Zapfen (47) zur Übertragung einer Axialbewegung vom Aktuator (31) auf die Lamellenkupplung (23) einsitzen.

## Claims

1. A differential drive with a rotatably arranged differential carrier (11), in which a multi-plate coupling (23) is effectively inserted between the differential carrier (11) and a sideshaft gear (29), and with an actuator (31) for the multi-plate coupling (23), wherein the differential carrier (11) comprises a cup-shaped carrier part (12) in which there are received sideshaft gears (28, 29) and differential gears (26, 27), and wherein the differential carrier comprises a cup-shaped cover (14) in which there are received the plates of the multi-plate coupling (23), wherein on the outside of the cover (14) there is arranged a sleeve (51),
**characterised in**
**that** the actuator (31) for the multi-plate coupling (23) is axially supported on the sleeve (51) of the cover (14).

2. A differential according to claim 1,
**characterised in**
**that** the outer plates of the multi-plate coupling (23) are form-lockingly held in the cover (14) in the direction of rotation and that the inner plates of the multi-plate coupling (23) are form-lockingly held in the direction of rotation on a hub (30) connected to a sideshaft gear (29).

3. A differential according to any one of claims 1 or 2,
**characterised in**
**that** the actuator (31) is radially supported on the sleeve (51).

4. A differential according to any one of claims 1 to 3,
**characterised in**
**that** the cover comprises apertures (22) on its circumference.

5. A differential according to claim 4,
**characterised in**
**that** the cover comprises blades (24) which are associated with the apertures (22) and comprise a centripetal effect for a surrounding medium.

6. A differential according to any one of claims 1 to 5,
**characterised in**
**that** the cover comprises axial bores (54) in which there are accommodated axially movable journals (47) for transmitting an axial movement from the actuator (31) to the multi-plate coupling (23).

## Revendications

1. Mécanisme différentiel comprenant une cage de différentiel (11) agencée en rotation, dans laquelle un embrayage à lamelles (23) est placé de manière active entre la cage de différentiel (11) et un pignon d'arbre latéral (29), et comprenant un actionneur (31) pour l'embrayage à lamelles (23), ladite cage de différentiel (11) comprenant une partie de cage (12) en forme de godet, dans laquelle sont reçus les pignons d'arbres latéraux (28,29) et des pignons de compensation (26, 27), et la cage de différentiel comprend un couvercle (14) en forme de godet, dans lequel sont reçues les lamelles de l'embrayage à lamelles (23), et une douille (51) est agencée à l'extérieur sur le couvercle (14),
**caractérisé en ce que** l'actionneur (31) pour l'embrayage à lamelles (23) est soutenu axialement sur la douille (51) du couvercle (14).

2. Différentiel selon la revendication 1,
**caractérisé en ce que** les lamelles extérieures de l'embrayage à lamelles (23) sont tenues par coopération de formes dans le sens de rotation dans le couvercle (14), et les lamelles intérieures de l'embrayage à lamelles (23) sont tenues par coopération de formes dans le sens de rotation sur un noyau (30) relié au pignon d'arbre latéral (29).

3. Différentiel selon l'une des revendications 1 ou 2,
**caractérisé en ce que** l'actionneur (31) est monté radialement sur la douille (51).

4. Différentiel selon l'une des revendications 1 à 3,
**caractérisé en ce que** le couvercle présente des traversées (22) sur la périphérie.

5. Différentiel selon la revendication 4,
**caractérisé en ce que** le couvercle comprend des aubes (24) associées aux traversées (22) avec une fonction centripète pour un fluide environnant.

6. Différentiel selon l'une des revendications 1 à 5,
**caractérisé en ce que** le couvercle présente des perçages axiaux (54) dans lesquels sont logés des tenons (47) axialement mobiles pour la transmission d'un mouvement axial depuis l'actionneur (31) vers l'embrayage à lamelles (23).
